# EUROPEAN PATENT SPECIFICATION

(11) **EP 0 447 445 B1**
(45) Date of publication and mention of the grant of the patent: **10.04.1996**
(21) Application number: 90900402.0
(22) Date of filing: 12.12.1989
(51) Int. Cl.: C08L 27/06, B32B 27/08

(54) **PLASTIC COVERING FOR FLOORS**
KUNSTSTOFFBELAG FÜR BÖDEN
REVETEMENT EN PLASTIQUE POUR SOLS

(30) Priority: 12.12.1988 SE 8804488
(43) Date of publication of application: 25.09.1991
(73) Proprietor: HOLMSUND GOLV AKTIEBOLAG, S-913 00 Holmsund (SE)
(72) Inventor: LUNDSTRÖM, Mats, S-913 00 Holmsund (SE)
(74) Representative: Onn, Thorsten
(86) International application number: SE8900726
(87) International publication number: WO9006970

(56) References cited:
- EP-A- 0 005 736
- EP-A- 0 243 911
- DE-A- 2 502 638
- Research Disclosure, Vol. 258, 1985 Anonymous: "Polymerlegierungen aus PVC unc Polyurethanan (High Solids)", see page 508 - page 509.
- Dialog Information Services, File 351, World Patent Index 81-89, Dialog Accession no 89-110686/15, PLUS-TECH KK: 'Composite resin composition containing thermoplastic urethans and vinyl chloride polymers useful for covering of electric wire', JP A 1056757, 890303, 8915 (Basic)

## Description

This invention relates to the use of a plastic covering for floor surfaces, which in its turn and comprising a polymeric alloy comprises a basic material in the form of PVC-plastic.

The use of plastic floors has lately become larger and larger. They are used in houses as well as in offices, schools and hospitals. Known plastic floors comprise a bottom layer which is made of softened PVC-material (PVC = polyvinylchloride) and a wearing layer comprising softened PVC-material.

PVC-plastic belongs to the group of thermoplasts, that is they become soft in heat and get stiff in cold. Thus, it is common to add a softening agent during the production of plastic coverings in order to make them sufficiently flexible during use at normal room temperature.

The softening agents being used today comprises phthalates, which have low molecular weight and are volatile. These phthalates, especially in combination with moisture, emit substances which can be very annoying for allergic persons and others. This can be the case when laying a plastic covering on a newly made concrete floor which has not yet stiffened completely. In such cases the soft maker of the covering can react with the moisture such that injurious substances are emitted from the covering. Another drawback with known plastic coverings is that the wear resistance of these ones is not sufficient in order to resist the wear that may occur for instance in schools and hospitals. Moreover, on known plastic coverings frictional heat can arise during the contact between the covering and an object, that is a local heating of the covering which can give ugly damages on the surface layer of the covering.

From Research Disclosure no. 258 (Oktober 1985) is previously known a polymeric alloy comprising mixture of PVC-material and a thermo-setting polyurethane material, which is a very expensive material. According to the document, the weight proportion of the polyurethane is considerably larger than the weight proportion of the inexpensive PVC-material and can be up to 97%. Since this known polymeric alloy comprises a thermo-setting polyurethane material, the waste during the production cannot be used again, which contributes to the high production cost for this type of plastic material.

In the material mentioned in Research Disclosure there is required an addition of organic solvents, which is injurious for the environment, in order that the material shall be kept floating during the production. This is a requirement in order that the material shall be able to be used as a coating agent on carrier materials like textile fabric and similar.

This invention intends to remove the problems with known technique. This has been made possible by a plastic covering of the kind mentioned by way of introduction which is characterized in that at least that part of the covering which is intended to be directed outwards in a space, contains the polymeric alloy, comprising of a mixture of the basic material and an alloying material, which is intended to make the basic material flexible, and which comprises thermo-plastic polyurethane, and that the weight proportion of basic material exceeds the weight proportion of alloying material in the polymeric alloy. Due to that fact the need for phthalates as a softener is eliminated, whereby the problems with emission of injurious substances are eliminated.

Furthermore, this material comprises thermo-plastic polyurethane in contrast to the material which comprises thermo-setting polyurethane. The material is very durable and resistant to wear and less sensitive for frictional heat, making the material very suitable to be used as a plastic covering for floors. Moreover, the main part of the material comprises the inexpensive PVC-plastic, and therefore the material is very inexpensive to produce. Another advantage with the material depending on the fact that thermo-plastic polyurethane is used is that the waste material can be used again during the production of the material. In contrast to the material mentioned in Research Disclosure the material herewith described is produced by extrusion and calendering.

As has been mentioned, previously known plastic coverings for floors comprise a bottom layer intended to rest against a concrete floor, and a wearing layer intended to be treaded. In that connection both layers comprise a basic material of PVC containing a softening agent comprising phthalates.

The plastic covering used according to the invention can be at least three different products.

Firstly, the plastic covering can be homogenous which means that the whole covering is made of the polymeric alloy and can be regarded as a single wearing layer. Thus, the basic material of the covering comprises PVC-plastic which has been mixed with an alloying material in the form of thermo-plastic polyurethane in order to form the polymeric alloy.

The second product may comprise two layers, one bottom layer and one wearing layer, each of which comprises the polymeric alloy. This means that compared with conventional coverings the softening agent containing phthalates has been replaced in both layers with an alloying material comprising thermo-plastic polyurethane.

The third product may also comprise two layers of which the bottom layer comprises a polymeric plastic which is made soft in a conventional way, while the wearing layer comprises the polymeric alloy according to the invention. Also in this case there is no emission of phthalates into the space from the plastic covering, since the bottom layer comprising the conventional softening agent is covered by the wearing layer comprising the innocuous plastic material.

The polymeric alloy comprises PVC-plastic with a proportion of 60-80 weight% and thermo-plastic polyurethane with a proportion of 20-40 weight%. Especially good qualities are obtained if the polymeric alloy comprises 65-75 weight% PVC-plastic and 25-35 weight% thermo-plastic polyurethane-plastic.

Thus, it is possible within the scope of the invention to produce a plastic covering comprising more layers than two. The important thing, however, is that the uppermost layer of the covering, that is the layer which is intended to be directed outwards in a space, shall contain the polymeric alloy.

## Claims

1. Use of a plastic covering for floor surfaces and comprising a polymeric alloy, which in its turn comprises a basic material in the form of PVC-plastics, **characterized** in that at least that part of the covering intended to be directed outwards in a space, contains the polymeric alloy, comprising a misture of the basic material and alloying material, which is intended to make the basic material flexible and which comprises thermo-plastic polyurethane, and that the polymeric alloy comprises a proportion of PVC-plastic of 60-80 weight %, preferably 67-75 weight %, and a proportion of thermo-plastic polyurethane-plastic of 20-40 weight %, preferably 25-35 weight %.

2. The use according to claim 1, **characterized** in that the plastic covering is homogenous, which means that the material of the entire covering comprises the polymeric alloy.

3. The use according to claim 1, **characterized** in that the plastic covering comprises at least a bottom layer and a wearing layer, and that the wearing layer comprises the polymeric alloy.

4. The use according to claim 3, **characterized** in that also the bottom layer comprises the polymeric alloy.

5. The use according to claim 3, **characterized** in that the bottom layer is built up by PVC-plastic to which a conventional softening agent has been added.

## Patentansprüche

1. Verwendung einer Kunststoffabdeckung als Bodenbelag, enthaltend eine Polymerzusammensetzung, die wiederum ein Grundmaterial in Form eines PVC-Kunststoffes enthält, dadurch gekennzeichnet, dass mindestens derjenige Anteil der Abdeckung, der dazu bestimmt ist, sich nach aussen in einen Raum zu erstrecken, die Polymerzusammensetzung aufweist, welche ein Gemisch aus dem Grundmaterial und einem Zusatz ist, welcher dazu bestimmt ist, das Grundmaterial biegsam zu machen und thermoplastisches Polyurethan enthält, und dass die Polymerzusammensetzung 60 bis 80 Gew.-%, bevorzugt 67 bis 75 Gew.-%, PVC-Kunststoff sowie 20 bis 40 Gew.-%, bevorzugt 25 bis 35 Gew.-%, thermoplastischen Polyurethankunststoff enthält.

2. Verwendung nach Anspruch 1, dadurch gekennzeichnet, dass die Kunststoffabdeckung homogen ist, d.h. dass das Material der gesamten Abdeckung aus der Polymerzusammensetzung besteht.

3. Verwendung nach Anspruch 1, dadurch gekennzeichnet, dass die Kunststoffabdeckung mindestens eine Unterschicht und eine Abnutzungsschicht aufweist, und dass die Abnutzungsschicht aus der Polymerzusammensetzung besteht.

4. Verwendung nach Anspruch 3, dadurch gekennzeichnet, dass auch die Unterschicht die Polymerzusammensetzung enthält.

5. Verwendung nach Anspruch 3, dadurch gekennzeichnet, dass die Unterschicht aus PVC-Kunststoff aufgebaut ist, dem ein üblicher Weichmacher zugegeben wurde.

## Revendications

1. Utilisation d'un revêtement plastique pour surfaces de sol et comprenant une composition polymère qui quant à elle, contient un matériau de base sous forme de matière plastique en PVC, caractérisée en ce qu'au moins cette partie du revêtement qui est prévue pour être dirigée vers l'extérieur dans un espace contient la composition polymère qui est un mélange du matériau de base et d'un matériau d'addition prévu pour rendre le matériau de bas flexible et qui contient du polyuréthane thermoplastique et que la composition polymère contient de 60 à 80 % du poids, de préférence de 67 à 75 en poids, de matière plastique en PVC, et de 20 à 40 % en poids, de préférence de 25 à 35 % en poids, de matière plastique en polyuréthane thermoplastique.

2. Utilisation selon la revendication 1, caractérisée en ce que le revêtement plastique est homogène, c'està-dire que la matière du revêtement entier comprend la composition polymère.

3. Utilisation selon la revendication 1, caractérisée en ce que le revêtement plastique comprend au moins une couche de fond et une couche d'usure et que la couche d'usure contient la composition polymère.

4. Utilisation selon la revendication 3, caractérisée en ce que la couche de fond comprend également la composition polymère.

5. Utilisation selon le revendication 3, caractérisée en ce que la couche de fond est composée d'une matière plastique en PVC additionnée d'un plastifiant conventionnel.
